# EUROPÄISCHE PATENTANMELDUNG

(11) **EP 2 592 586 A1**
(43) Veröffentlichungstag der Anmeldung: **15.05.2013**
(21) Anmeldenummer: 12157506.2
(22) Anmeldetag: 29.02.2012
(51) Int. Cl.: G06N 3/00

(54) **Personenstromsimulation mit Wartezonen**

(30) Priorität: 14.11.2011 EP 11188972
(71) Anmelder: Siemens Aktiengesellschaft, 80333 München (DE)
(72) Erfinder: Pfaffinger, Dr. Alexander, 81739 München (DE); Royer, Dr. Christian, 85521 Ottobrunn (DE); Davidich, Dr. Maria, 82061 Neuried (DE); Mayer, Dr. Hermann Georg, 83209 Prien am Chiemsee (DE)

(57) **Zusammenfassung**

System und Verfahren zur Vorhersage von Bewegungen von Personen in einem räumlichen Gebiet mit Wartezonen, basierend auf einer Personenstromsimulation mit zellulären Automaten, das System bzw. das Verfahren aufweisend: eine Rechnereinrichtung zur Vorausberechnung der Personenbewegungen in dem räumlichen Gebiet von Quellen zu Zielen der Personen, wobei die Quellen und Ziele Inputparameter für die Rechnereinrichtung sind, wobei sich die Personen von den Quellen zu den Zielen über Wartezonen als Zwischenziel bewegen, wobei die Personen sich in der Wartezone nach Einnahme eines Warteplatzes solange stationär verhalten bis ein Ereignis eintritt, und wobei nach Eintritt des Ereignisses die Personen sich zum Ziel bewegen. Die Berücksichtigung von Wartezonen in Personensimulationsmodellen ermöglicht eine realistische Prognose des Personenverhaltens insbesondere in Bahnhöfen oder Flughäfen.

## Beschreibung

Die vorliegende Erfindung betrifft ein System zur Vorhersage von Bewegungen von Personen in einem räumlichen Gebiet mit Wartezonen, basierend auf einer Personenstromsimulation mit zellulären Automaten. Weiterhin betrifft die vorliegende Erfindung Assistenzsysteme zur Steuerung von Bewegungen von Personen basierend auf einer Personenstromsimulation bzw. zur Layoutplanung der Infrastruktur eines für Personen zugänglichen räumlichen Gebietes basierend auf einer Personenstromsimulation für das Gebiet. Ferner betrifft die Erfindung ein Verfahren zur Simulation von sich in einem räumlichen Gebiet bewegenden Personenströmen beruhend auf zellulären Zustandsautomaten, wobei das Gebiet mit einem Zellgitter überzogen wird und jede Zelle verschiedene Zustände einnehmen kann.

Überall wo Objekte oder Personen gehäuft auftreten, entstehen massentypische Phänomene. Einige dieser Phänomene gefährden die Sicherheit für Leib und Leben, etwa wenn bei einer Massenveranstaltung eine Panik ausbricht. Weitere Phänomene bedürfen geeigneter Lenkungsmaßnahmen, um Abläufe in technischer und ökonomischer Hinsicht effizient zu gestalten. Beispiele hierfür sind eine "Evakuierung" eines Geländes nach einer Maß beispielsweise in einem Fußballstadion und dessen Umfeld, oder die Lenkung des Straßenverkehrs zu Hauptverkehrszeiten.

Personenstromsimulatoren imitieren das Verhalten einer großen Anzahl von Menschen an unterschiedlichen Veranstaltungsorten, beispielsweise beim Oktoberfest, für insbesondere statistische Zwecke und um die Sicherheit vor Ort zu verbessern. Ein Ziel hierbei ist beispielweise die Identifikation kritischer Massen mit Hilfe der Simulation, das heißt, die Identifikation von Gefahren durch Ballungen von Menschen und kritischen Menschenströmen sowie eine Prognose über deren zeitlichen Verlauf, um angemessene Maßnahmen einleiten zu können.

Ein Personenstromsimulator berechnet die zeitlich und räumlich gesehen nächste Position einer Person anhand von mathematischen Verfahren und damit anhand von festen Vorschriften, die menschliche Verhaltensmuster nachahmen sollen. Es werden verschiedene Modelle aus dem Bereich der Mikro- bzw. Makromodellierung verwendet, und zwar Verfahren basierend auf partiellen Differenzialgleichungen bis hin zu Verfahren basierend auf zellulären Automaten.

Gemäß dem Stand der Technik liegen bereits einige Ansätze vor, um insbesondere Personenströme zu simulieren. Die herkömmlichen Ansätze weisen jedoch Mängel auf, die eine akkurate Abbildung von Massenphänomenen und damit die Nutzbarkeit von Simulationsergebnissen einschränken.

Es ist Aufgabe der vorliegenden Erfindung ein System, Assistenzsysteme sowie ein Verfahren zur Simulation von sich auf einem Gebiet bewegenden Objektströmen beruhend auf zellulären Zustandsautomaten derart zu verbessern, dass die Simulation die Objektströme möglichst realistisch abbildet.

Die Aufgabe wird gelöst durch ein System zur Vorhersage von Bewegungen von Personen in einem räumlichen Gebiet mit Wartezonen, basierend auf einer Personenstromsimulation mit zellulären Automaten, das System aufweisend: eine Rechnereinrichtung zur Vorausberechnung der Personenbewegungen in dem raumlichten Gebiet von Quellen zu Zielen der Personen, wobei die Quellen und Ziele Inputparameter für die Rechnereinrichtung sind, wobei sich die Personen von den Quellen zu den Zielen über Wartezonen als Zwischenziel bewegen, wobei die Personen sich in der Wartezone nach Einnahme eines Warteplatzes solange stationär verhalten bis ein Ereignis eintritt, und wobei nach Eintritt des Ereignisses die Personen sich zum Ziel bewegen. Mit der Simulation von Personenströmen soll das Verhalten von realen Menschenmengen virtuell nachgebildet werden. Es soll auf unterschiedliche Situationen anwendbar sein.

Deshalb ist nur ein Simulator, der unterschiedliche "real life"- Szenarien reproduzieren kann vertrauenswürdig und anwendbar in der Vorhersage von kritischen Situationen. In den meisten Simulation-Szenarien bewegen sich die Personen zielstrebig auf ihr Ziel zu. Beobachtungen z.B. am Frankfurter Hauptbahnhof haben während Feldversuchen jedoch gezeigt, dass ein signifikanter Anteil der Personen steht, z.B. um auf andere Personen oder auf einen Zug zu warten. Dadurch beeinflussen diese Personen die Personenstromdynamik mehr als andere, sich bewegende Personen. In kritischen Situationen können sie andere Personen stark blockieren. Deshalb ist die Berücksichtigung und Modellierung von Wartezonen in Personenstrom-Simulatoren nötig, um Personenströme in typischen Bahnhofs-Szenarien realistisch stimulieren zu können.

Eine erste vorteilhafte Ausgestaltung der Erfindung liegt darin, dass die Wartezonen als polygonförmige Bereiche modelliert sind. Polygonförmige Bereiche erlauben eine einfache und variable Modellierung durch einen Benutzer, z.B. durch ein CAD-Programm wie AutoCAD.

Eine weitere vorteilhafte Ausgestaltung der Erfindung liegt darin, dass ein Warteplatz für eine Person zufällig gewählt wird und die Navigation innerhalb der Wartezone zu dem Warteplatz direkt mittels euklidischen Abstands erfolgt. Ziele ziehen Personen an, wie eine positive Ladung Elektronen anzieht. Weiterhin stoßen sich Personen gegenseitig ab, wie Elektronen sich untereinander abstoßen. Ebenso stoßen Hindernisse (z.B. Pfeiler) Personen ab, wie eine negative Ladung Elektronen abstößt. Die Stärke solcher Potenzialfelder kann als Funktion des euklidischen Abstands der Person vom Ziel dargestellt werden. Der euklidische Abstand lässt sich leicht bestimmen und außerdem ist die Navigation der Personen über den euklidischen Abstand sehr effizient.

Eine weitere vorteilhafte Ausgestaltung der Erfindung liegt darin, dass sich die Personen in der Simulation nach Eintritt des Ereignisses auf das Ziel, ein Zwischenziel oder in eine weitere Wartezone bewegen. Dadurch wird insbesondere in Bahnhofs- und Flughafenszenarien ist eine realitätsnahe Simulation von Personenbewegungen ermöglicht.

Eine weitere vorteilhafte Ausgestaltung der Erfindung liegt darin, dass nach Eintritt des Ereignisses die Personen sich in der Simulation gemäß einer vorgegebenen Personenrate auf das Ziel in Bewegung setzen. Die Personen, die ihre Wartepunkte erreicht haben, bleiben nun so lange dort stehen, bis ihr Ziel weitergeschaltet wird auf das nächste Ziel bzw. Zwischenziel, z.B. den Zug. Dieser Zeitpunkt kann für alle Personen gleich sein, z.B. die Ankunftszeit des Zuges. Die Weiterschaltung kann aber auch gemäß eines TQMs (time quantity management) erfolgen, in dem eine gewisse Personenrate pro Sekunde hinterlegt ist. Nach der Zielweiterschaltung setzen sich die Personen wieder in Bewegung und bewegen sich auf das nächste Ziel zu. Dies erlaubt eine einfache Modellierung von Personenbewegungen.

Eine weitere vorteilhafte Ausgestaltung der Erfindung liegt darin, dass das System eine Erfassungseinrichtung umfasst, zur Erfassung der Personenbewegungen in dem räumlichen Gebiet, wobei Quellen und/oder Ziele der Personen im räumlichen Gebiet bestimmbar sind. Die Erfassung der Personenbewegungen kann z.B. über ein Kamera- oder Videosystem erfolgen und mit Hilfe von Mustererkennungsverfahren analysiert und ausgewertet werden. Dadurch ist es möglich aktuell vorliegende Situationen (z.B. an Bahnhöfen) für die Simulation (basierend auf einem Personenstrommodell) einer zu erwartenden Personenbewegung zu verwenden. Dies ermöglicht realistische Prognosen.

Eine weitere vorteilhafte Ausgestaltung der Erfindung liegt darin, dass Quellen und Ziele der Personen im räumlichen Gebiet durch die Auswertung von Altdaten und/oder Schätzungen bestimmt sind. Schätzungen können z.B. auf heuristischen oder empirischen Grundlagen basieren. Altdaten werden durch Datenbanken dem Personenstrommodell zur Simulation zur Verfügung gestellt.

Eine weitere vorteilhafte Ausgestaltung der Erfindung liegt darin, dass das System eine Leitstelle zur Ansteuerung von Leitelementen zur Steuerung der Personenbewegungen umfasst. Basierend auf den Simulationsergebnissen können automatisch auf die jeweilige Situation angepasste Leitelemente (z.B. Schranken, Ampeln, Hinweistafeln, Lautsprecher etc.) adäquat angesteuert werden, um auf die Personenbewegungen steuernd einzuwirken.

Eine weitere vorteilhafte Ausgestaltung der Erfindung liegt in einem Assistenzsystem zur Steuerung von Bewegungen von Personen basierend auf einer Personenstromsimulation, das Assistenzsystem aufweisend:
eine Erfassungseinrichtung zur Online-Erfassung von aktuellen Personenbewegungen in einem räumlichen Gebiet;
eine Einrichtung zum Bereitstellen von Altdaten und/oder Schätzungen bezüglich von Quellen und Zielen in dem räumlichen Gebiet;
eine Rechnereinrichtung zur Vorausberechnung der Personenbewegungen in dem räumlichen Gebiet basierend auf den von den aktuellen Personenbewegungen und den Altdaten und/oder Schätzungen abgeleiteten Quellpunkten und Zielpunkten der Personen in dem räumlichen Gebiet;
eine Leitzentrale zur Ansteuerung von Leitelementen zur Steuerung der Personenbewegungen,
wobei sich die Personen von den Quellpunkten zu den Zielpunkten über Wartezonen als Zwischenziele bewegen, wobei die Personen sich in einer Wartezone nach Einnahme eines Warteplatzes solange stationär verhalten bis ein Ereignis eintritt, und wobei nach Eintritt des Ereignisses die Personen sich zum jeweiligen Zielpunkt bewegen. Durch das AssistenzSystem können im Voraus (insbesondere, wenn auf Altdaten zurückgegriffen wird) mögliche zu erwartende Szenarien durchgespielt werden um das Bedienpersonal und aber auch Hilfspersonal vor Ort darauf einzustellen und zu schulen (z.B. Evakuierungen in Notfällen). Die Online-Erfassung von aktuellen Personenbewegungen ermöglicht aber auch eine automatische Ansteuerung der Leitelemente (Schranken, Tore etc.) basierend auf einer aktuell vorliegenden Situation.

Eine weitere vorteilhafte Ausgestaltung der Erfindung liegt in einem Assistenzsystem zur Layoutplanung der Infrastruktur eines für Personen zugänglichen räumlichen Gebietes basierend auf einer Personenstromsimulation für das Gebiet, das Assistenzsystem aufweisend:
eine Einrichtung zum Bereitstellen von Altdaten und/oder Schätzungen bezüglich der Personenbewegungen in dem räumlichen Gebiet;
eine Rechnereinrichtung zur Simulation von Personenbewegungen in dem räumlichen Gebiet basierend auf den Altdaten und/oder aus Schätzungen abgeleiteten Quellpunkten und Zielpunkten der Personen in dem räumlichen Gebiet,
wobei in der Simulation sich die Personen von den Quellpunkten zu den Zielpunkten über Wartezonen als Zwischenziele bewegen, wobei die Personen sich in einer Wartezone nach Einnahme eines Warteplatzes solange stationär verhalten bis ein Ereignis eintritt, und wobei nach Eintritt des Ereignisses die Personen sich zum jeweiligen Zielpunkt bewegen. Dadurch wird Layout-Planung z.B. von Bahnhöfen, Flughäfen oder Orten für Massenveranstaltungen insbesondere im Hinblick auf Durchsatz (z.B. Anfertigung) von Personenbewegungen oder hinsichtlich Evakuierungsrouten bei Notfällen unterstützt und objektiviert.

Eine weitere vorteilhafte Ausgestaltung der Erfindung liegt in einem Verfahren zur Simulation von sich in einem räumlichen Gebiet bewegenden Personenströmen beruhend auf zellulären Zustandsautomaten, wobei das Gebiet mit einem Zellgitter überzogen wird und jede Zelle verschiedene Zustände einnehmen kann, das Verfahren umfasst die folgenden Schritte:
Erfassung der Personenbewegungen in dem räumlichen Gebiet durch eine Erfassungseinrichtung;
Bestimmen von Quellpunkten und Zielpunkten der Personen im räumlichen Gebiet durch eine mit der Erfassungseinrichtung datenmäßig verbundenen Auswerteeinrichtung;
Berechnung der Personenbewegungen in dem räumlichen Gebiet von den Quellpunkten zu den Zielpunkten der Personen durch eine Simulation auf einer Rechnereinrichtung, wobei die Quellpunkte und Zielpunkte der Personen Inputparameter für die Simulation sind, wobei bei der Simulation berücksichtigt wird, dass sich die Personen von den Quellpunkten zu den Zielpunkten über Wartezonen bewegen, wobei die Personen sich in der Warte zone nach Einnahme eines Warteplatzes solange stationär verhalten bis ein Ereignis eintritt, und wobei nach Eintritt des Ereignisses die Personen sich zum Ziel bewegen. Die Berücksichtigung von Wartezonen in Personensimulationsmodellen ermöglicht eine realistische Prognose des Personenverhaltens insbesondere in Bahnhöfen oder Flughäfen.

Ein Ausführungsbeispiel der Erfindung ist in der Zeichnung dargestellt und wird im Folgenden erläutert.

Dabei zeigen:
- FIG 1: beispielhafte Darstellungen zur Ausbildung eines Gitternetzes,
- FIG 2: eine weitere beispielhafte Darstellung eines Gitternetzes für die Verwendung in einem zellulären Automaten,
- FIG 3: ein Ausführungsbeispiel eines erfindungsgemäßen Systems,
- FIG 4: eine beispielhafte Topologie eines Szenario mit einem Bahnsteig,
- FIG 5: eine beispielhafte Simulation durch das erfindungsgemäße System bzw. Verfahren,
- FIG 6: ein beispielhaftes Ablaufdiagramm für das erfindungsgemäße Verfahren, und
- FIG 7: eine beispielhafte Anwendung für das erfindungsgemäße System bzw. Verfahren.

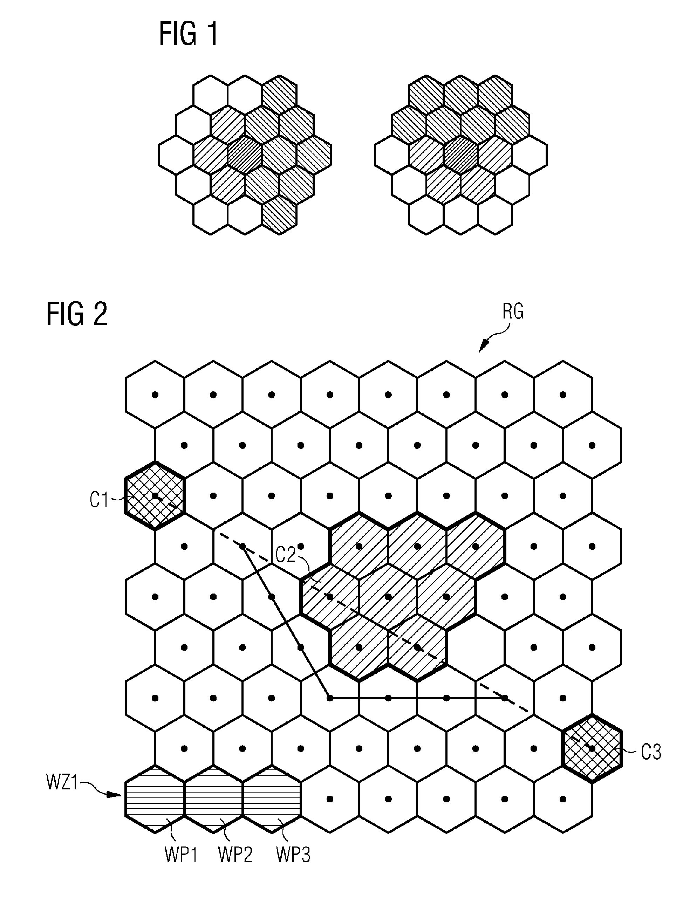

Figur 1 zeigt beispielhafte Darstellungen zur Ausbildung eines Gitternetzes. Figur 1 zeigt einen häufig gewählten Ansatz für Personen- oder Objektstromsimulationen auf der Grundlage von zellulären Zustandsautomaten. Hier wird ein Gebiet, beispielsweise ein Straßenzug oder Bahnsteig, mit einem Zellgitter überzogen. In den Abbildungen nach Figur 1 wurde exemplarisch ein hexagonales Gitter gewählt. Andere Zellendarstellungen sind ebenso gebräuchlich, beispielsweise quadratische oder dreieckige. Jede Zelle kann verschiedene Zustände einnehmen, etwa gefüllt, mit einem Hindernis, besetzt, durch eine Person, oder leer.

Figur 2 zeigt eine weitere beispielhafte Darstellung eines Gitternetzes für die Verwendung in einem zellulären Automaten zur Personenstromsimulation. Die Bewegung von Personen kann somit simuliert werden durch eine Diskretisierung des zugrundeliegenden räumlichen Gebiets (Simulationsgebiets) durch eine Überziehung des Gebietes mit hexagonalen Zellen. Zu jedem Zeitschrift der Simulation der Bewegung einer Person kann sich auf einer Zelle maximal nur jeweils eine Person befinden.

Der Zustand einer Zelle dadurch definiert, ob eine Person oder ein Objekt (z.B. auch ein Hindernis) in der Zelle anwesend ist oder nicht. Eine Zelle kann aber auch eine Quelle oder ein Ziel von Personen bzw. ein Hindernis darstellen, z.B. einen Pfeiler oder einen Kiosk. Personen bewegen sich von einer Zelle zu einer anderen und verändern damit den jeweiligen Zustand einer betroffenen Zelle. Im Beispiel nach Figur 2 befindet sich eine Person in Zelle C1 und möchte sich weiterbewegen zu Zelle C3. Die Person in Zelle C1 könnte sich direkt auf Zelle C3 zubewegen, dargestellt durch die gestrichelte Linie. Dies ist aber nicht möglich, da, wie in Figur 2 dargestellt, Hindernisse (z.B. Zelle C2) den direkten Weg zwischen Zelle C1 und Zelle C3 nicht zulassen. Eine Person muss somit, um von Zelle C1 zu Zelle C3 zu gelangen, sich um das Hindernis (Zelle C2) bewegen, dargestellt durch die durchgezogene Linie. Das Zellenmodell (zellulärer Automat) wie dargestellt in Figur 1 kann Teil eines Personenstromsimulationsmodells sein. Weiterhin ist es möglich zu implementieren, dass sich die Personen mit unterschiedlichen Geschwindigkeiten im Gittermodell bei einem Simulationsschritt bewegen. Eine Person kann pro Simulationsschritt maximal eine Zelle vorrücken. Die unterschiedlichen Geschwindigkeiten von Personen lassen sich durch die Häufigkeit des Vorrückens auf dem Zellgitter modellieren.

In der Abbildung gemäß Figur 2 kann die Zelle C1 als Quelle von Personen agieren, z.B. kann Zelle C1 eine Rolltreppe repräsentieren, die Fußgänger von einer U-Bahnstation zur Oberfläche transportiert. Die Zelle C1 kann aber auch ein Einlasstor zu einem räumlichen Gebiet RG sein, das zum Zweck der Simulation mit einem Zellgitter überzogen ist. Die Zelle C3 kann als Ziel betrachtet werden, wie z.B. der Ausgang des räumlichen Gebiets RG oder eine Zugtüre oder ein Gate am Flughafen.

Das in Figur 1 dargestellte Modell erlaubt, dass bei der Simulation Freiheitsgrade gewählt werden können, wie z.B. die Geschwindigkeit der Fußgänger. Parameter für die Bewegungsgeschwindigkeit einzelner Personen sind Geschlecht, Alter, Tageszeit usw. Die Geschwindigkeit einer einzelnen Person kann z.B. als Gaußsche Zufallsverteilung modelliert werden. Bewegen sich die Personen aber in Gruppen oder Massen erfolgt eine Verminderung der Geschwindigkeit, die durch die anderen Gruppenmitglieder bewirkt wird, da die anderen Gruppenmitglieder als Hindernisse agieren. Dieser Aspekt kann z.B. durch die Einführung von Bremsklassen oder Abbremsfaktoren im Simulationsmodell berücksichtigt werden. Eine Person, die auf einer Zelle steht, stellt für die übrigen Personen ein Hindernis dar.

In Figur 2 ist auch dargestellt, dass das räumliche Gebiet RG Wartezonen WZ enthalten kann, die eine Person ausgehend von einer Quelle ansteuert und dort einen Warteplatz WP1 - WP3 einnimmt, bevor sich die Person nach Eintritt eines Ereignisses (z.B. Ankunft eines Zuges) weiter auf das Ziel (z.B. Zugtür) zubewegt. Dies ist insbesondere in Bahnhöfen ein realistisches Verhalten von Personen.

Für einen Fachmann ist es klar, dass ein Personenstromsimulationsmodell nicht auf die Verwendung von zellulären Automaten beschränkt ist und deshalb eine Einschränkung der vorliegenden Erfindung darstellt. Implementierungen von Personenstromsimulationsmodellen können z.B. auch auf Ontologien, Regelsystemen, formalen und/oder semi-formalen Modellen beruhen.

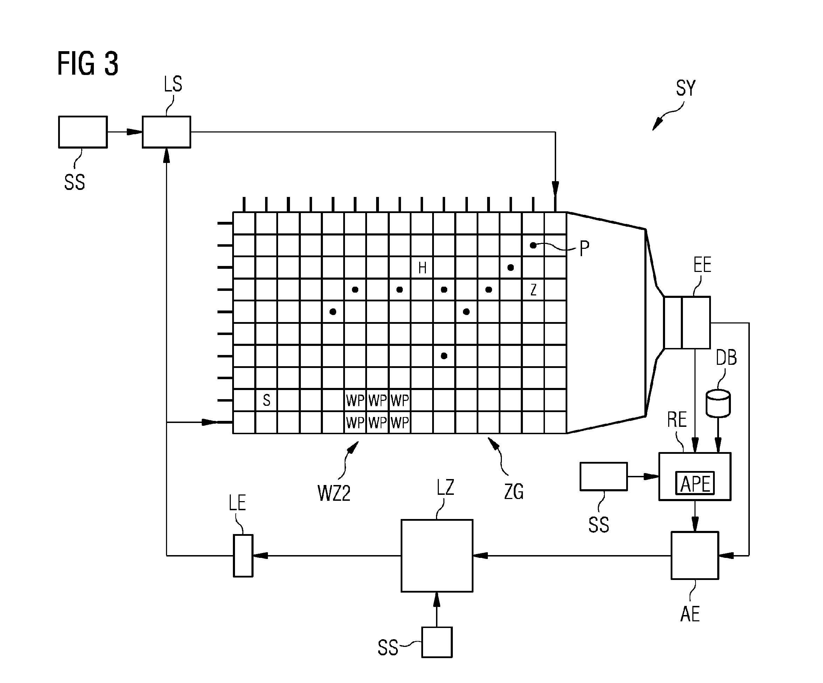

Figur 3 zeigt ein Ausführungsbeispiel eines erfindungsgemäßen Systems SY. Das System SY erfasst mittels einer Erfassungseinrichtung EE Positionen und Bewegungen von Personen P in einem räumlichen Gebiet (z.B. Bahnhof, Ort einer Massenveranstaltung). Das System SY weist eine Rechnereinrichtung RE auf. Diese berechnet die Bewegungen der Personen P in dem durch die Erfassungseinrichtung EE erfassten räumlichen Gebiet für einen zukünftigen Zeitpunkt oder einer zukünftigen Zeitdauer voraus. Die Leistungsfähigkeit der Rechnereinrichtung RE sollte ein Vorausberechnen in Echtzeit ermöglichen, so dass zukünftige Szenarien für eine Steuerung eines Personenstroms rechtzeitig zur Verfügung stehen. Die Rechnereinrichtung RE kann beispielsweise ein zellulärer Zustandsautomat sein oder allgemein skalare Navigationsfelder nutzen. Dazu kann das erfasste räumliche Gebiet durch die Rechnereinrichtung RE von einem Zellgitter ZG überlagert werden. Jeder Zelle kann mittels der Rechnereinrichtung RE ein zeitlich veränderbares Gesamtpotenzial oder auch ein Zustand (z.B. Anzahl der Personen P in einer Zelle) zugeordnet sein. Personen P, werden anfangs auf dem Zellgitter ZG in der Rechnereinrichtung RE positioniert, und zwar mittels der durch die Erfassungseinrichtung EE erzeugten Daten. Eine Personenanzahl kann beispielsweise n=50 sein. Mittels der Rechnereinrichtung RE, die beispielhafter weise ein zellulärer Zustandsautomat ist, können den Zellen zeitlich veränderlich Gesamtpotenzialwerte zugeordnet werden. Zu einem Startzeitpunkt Ts werden mittels des zellulären Zustandsautomaten die Potenziale aktiviert, die simulierten Personen P bewegen sich ausgehend von einer jeweiligen Startzelle S jeweils an anderen Personen P und Hindernisse H zu einer Wartezonen WZ2 und nehmen dort einen Warteplatz WP ein. Nach Eintritt eines Ereignisses (z.B. Zug fährt ein) bewegen sich die Personen P von der Wartezone WZ2 weiter zum Ziel Z. Zu einem Endzeitpunkt Te können alle Personen P ihre jeweiligen angenommenen Ziele Z erreicht haben. Die von der Erfassungseinrichtung EE bereitgestellten Daten können beispielsweise die Ausgangspositionen, Bewegungsrichtungen und Bewegungsgeschwindigkeiten der Personen P sein. Diese Daten können in dem zellulären Zustandsautomaten beispielsweise für eine Berechnung jeweiliger Personen- oder Male verwendet werden. Optional kann die Rechnereinrichtung RE mittels einer Anpassungseinrichtung APE automatisch oder über eine Mensch-Maschine-Schnittstelle SS zur Anpassung von Parametern der Rechnereinrichtung RE angesteuert werden. Somit können situationsbedingt Simulationsparameter (z.B. Richtung, Geschwindigkeit, Anzahl von Personen) angepasst werden. Die Daten der Erfassungseinrichtung EE (z.B. Videosystem) und/oder die Ergebnisse der Rechnereinrichtung RE können in einer Auswerteeinrichtung AE bewertet werden. Die Auswerteeinrichtung AE und die Anpassungseinrichtung APE können in die Recheneinrichtung RE integriert sein. So kann beispielsweise eine Personendichte im Zellgitter ZG erfasst und ausgewertet werden. Die Auswerteeinrichtung AE kann Steuersignale an eine Leitzentrale LZ zur Steuerung von Leitelementen LE, das heißt, Elementen zum Leiten von Personenströmen, wie es beispielsweise Gebäudeelemente (z.B. Tore, Schranken) oder Lautsprecher LS, Türen oder Hinweisschildern, sind, ausgehen. Das System SY eignet sich insbesondere für eine Steuerung von Personenströmen beispielsweise in offenen Gebäuden (z.B. Bahnhöfe) oder aber auch für Orte von Massenveranstaltungen (z.B. Fußballstadien). Das räumliche Gebiet des erfindungsgemäßen Systems SY kann als ein entsprechendes Gebiet mit einem Zellgitter ZG in einen zellulären Zustandsautomaten (z.B. mit hexagonalen Zellen) übertragen werden.

Die Rechnereinrichtung RE kann eine Anpassungseinrichtung APE aufweisen, die Modelle in der Rechnereinrichtung RE hinsichtlich Parameter, und zwar insbesondere hinsichtlich Personenschaften, aktuell bereitstellt beziehungsweise aktualisiert. Personeneigenschaften können eine Wegewahl und/oder eine Zielwahl einer jeweiligen Person P sein. Die Anpassungseinrichtung APE passt Personeneigenschaften insbesondere abhängig von einem Ereignis, zeitlich oder räumlich festgelegt oder zufallsgesteuert dynamisch an.

Die Rechnereinrichtung RE kann über eine Datenbank DB Altdaten bezüglich von Quellen und Zielen als Input für die Personenstromsimulation in dem entsprechenden räumlichen Gebiet erhalten. Die Rechnereinrichtung RE kann als handelsüblicher Computer (PC, Laptop, Workstation etc.) mit entsprechender Software ausgestaltet sein.

Über Mensch-Maschine-Schnittstellen SS kann eine Bedienperson eine Leitzentrale LZ, den Lautsprecher LS oder die Rechnereirichtung RE direkt bedienen. Mit der Mensch-Maschine-Schnittstelle SS zur Ansteuerung der Rechnereinrichtung RE können zudem Bedienpersonen geschult und die Parametereinstellungen der Modelle der Rechnereinrichtung RE direkt, näher an die Realität angepasst, eingestellt werden. Über die Mensch-Maschine-Schnittstelle SS zur Ansteuerung der Rechnereinrichtung RE können außerdem Schätzungen bezüglich von Quellen und Zielen in dem räumlichen Gebiet eingegeben werden.

Erfingdungsgemäß wurde ein Wartezonen-Modell entwickelt für auf zelluläre Automaten basierende Personenstrom-Simulatoren, um damit z.B. auf Züge wartende Personen in Bahnhöfen simulieren zu können. Insbesondere lässt sich folgende Situation in Bahnhöfen vorteilhaft simulieren: Die Zugfahrgäste begeben sich zunächst auf den Bahnsteig (Wartezone), warten dort bis der Zug einfährt und steigen anschließend ein.

Die Wartezonen sind vorteilhafter weise modelliert als polygonförmige Bereiche (polygonförmige Bereiche lassen sich leicht durch gängige CAD-Programme modellieren). Sie sind zudem Zwischenziel der Personen. Personen, die zu einem Zug möchten, haben als Zwischenziel die Wartezone (Bahnsteig) und als nächstes Ziel den Zug. Erreicht eine Person ihre Wartezone, so sucht sie sich eine zufällige Zelle (Wartepunkt) darin aus, geht möglichst auf direktem Weg dorthin und bleibt dann dort stehen. Die Navigation in der Wartezone zu diesem Wartepunkt erfolgt vorteilhafter weise nicht über das Potentialfeld, das die Bewegung der Personen normalerweise beeinflusst, sondern sie wird aus Gründen der Effizienz über den euklidischen Abstand bestimmt. Prinzipiell ist eine Navigation in der Wartezone aber auch über das Potentialfeld möglich.

Die Personen, die ihre Wartepunkte erreicht haben, bleiben nun so lange dort stehen, bis ihr Ziel weitergeschaltet wird auf das nächste Ziel, den Zug. Dieser Zeitpunkt kann für alle Personen gleich sein, z.B. die Ankunftszeit des Zuges. Die Weiterschaltung kann aber auch gemäß eines TQMs (time quantity management) erfolgen, in dem eine gewisse Personenrate pro Sekunde hinterlegt ist. Nach der Zielweiterschaltung setzen sich die Personen wieder in Bewegung und bewegen sich auf das nächste Ziel zu.

Wartezonen haben einen großen Einfluss auf die Dynamik von Fußgängerströmen. In Bahnhofs-Szenarien ist eine realitätsnahe Simulation ohne Berücksichtigung der Wartezonen nicht möglich. Ohne sie würde die Simulation zu kritischen und unrealistischen Ergebnissen führen. Mit dem entwickelten Wartezonen-Modell lassen sich realistische Szenarien mit Wartebereichen korrekt simulieren, , wie Feldexperimente und Videodaten-Analysen zeigen.

Durch die Auswahl eines zufälligen Wartepunkts innerhalb der Wartezone ergibt sich eine gleichmäßige Verteilung der Personen auf den Wartebereich. Die Navigation der Personen über den euklidischen Abstand ist sehr effizient. Auch Hindernisse, die sich in Wartezonen befinden, wirken sich nicht negativ aus.

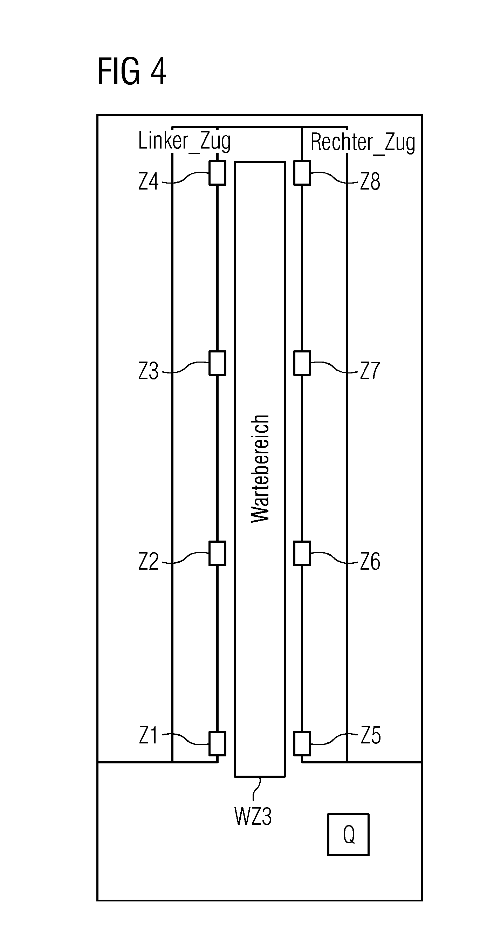

Figur 4 zeigt eine beispielhafte Topologie eines Szenarios mit einem Bahnsteig. Rechts und links in der Abbildung nach Figur 4 befinden sich die Haltepositionen der Züge mit den Positionen der Zugtüren und in der Mitte ist der Wertebereich WZ3 dargestellt. Die Zugtüren stellen die Ziele Z1 - Z8 der Personen im Wartebereich WZ3 dar. Folgende Situation soll simuliert werden: Die Zugfahrgäste begeben sich zunächst ausgehend von einer Quelle Q (z.B. Tür von Bahnhofsgebäude zum Gleisbereich oder Rolltreppe, die Personen von der U-Bahn zum Gleisbereich bringt) auf den Bahnsteig (Wartezone WZ3), warten dort bis der Zug einfährt und steigen anschließend ein. Personen, die zu einem Zug möchten, haben als Zwischenziel die Wartezone (Bahnsteig) WZ3 und als nächstes Ziel den Zug bzw. eine Zugtüre Z1 - Z8. Erreicht eine Person ihre Wartezone WZ3, so sucht sie sich eine zufällige Zelle (Wartepunkt) darin aus, geht möglichst auf direktem Weg dorthin und bleibt dann dort stehen. Die Navigation in der Wartezone WZ3 zu diesem Wartepunkt erfolgt vorteilhafter weise nicht über das Potentialfeld, das die Bewegung der Personen normalerweise beeinflusst, sondern sie wird aus Gründen der Effizienz über den euklidischen Abstand bestimmt. Prinzipiell ist eine Navigation in der Wartezone aber auch über die Potentialfelder eines zellulären Automaten möglich.

Die Personen, die ihre Wartepunkte erreicht haben, bleiben nun so lange dort stehen, bis ihre Fortbewegung (Zielweiterschattung) weitergeschaltet wird auf das nächste Ziel, den Zug bzw. eine der Zugtüren Z1 - Z8. Dieser Zeitpunkt kann für alle Personen gleich sein, z.B. die Ankunftszeit des Zuges. Die Weiterschaltung kann aber auch gemäß eines TQMs (time quantity management) erfolgen, in dem eine gewisse Personenrate pro Sekunde hinterlegt ist. Nach der Zielweiterschaltung setzen sich die Personen wieder in Bewegung und bewegen sich auf das nächste Ziel zu.

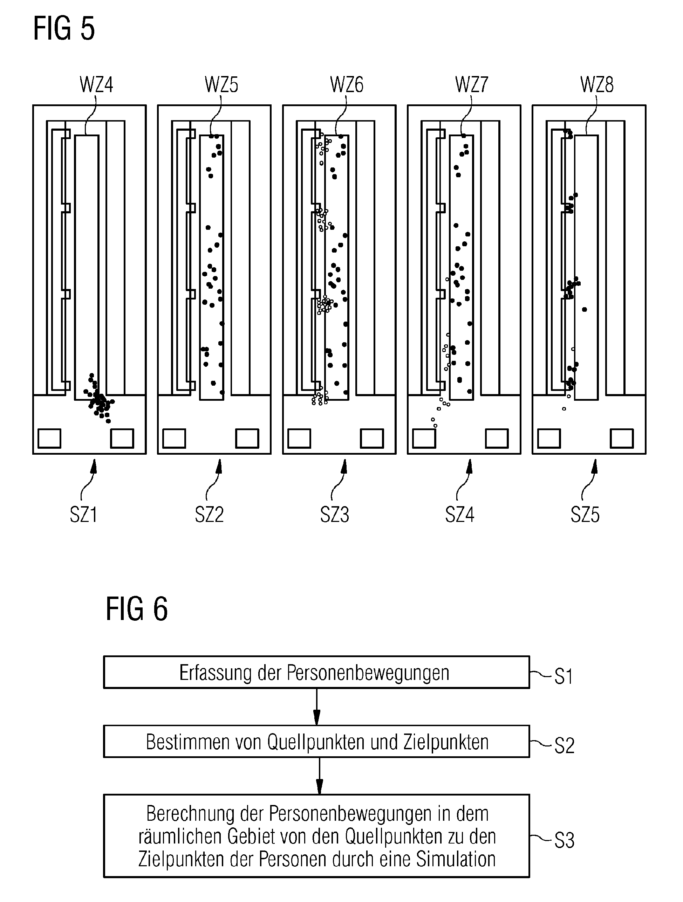

Figur 5 zeigt eine beispielhafte Simulation durch das erfindungsgemäße System bzw. Verfahren. In der in der Bildsequenz SZ1 bis SZ5 dargestellten Simulation strömen zunächst die Personen (Punkte) auf den Bahnsteig. Anschließend warten sie in der Wartezone WZ4 - WZ8 in der Mitte des entsprechenden Bahnsteigs. Nachdem dann die ankommenden Zugfahrgäste ausgestiegen sind, gehen die wartenden Personen zum Zug, d.h. zu den Zugtüren (Figur 4, Z1 - Z8), und steigen ein.

Figur 6 zeigt ein beispielhaftes Ablaufdiagramm für das erfindungsgemäße Verfahren zur Simulation von sich in einem räumlichen Gebiet bewegenden Personenströmen beruhend auf zellulären Zustandsautomaten, wobei das Gebiet mit einem Zellgitter überzogen wird und jede Zelle verschiedene Zustände einnehmen kann, das Verfahren umfasst die folgenden Schritte:
(S1) Erfassung der Personenbewegungen in dem räumlichen Gebiet durch eine Erfassungseinrichtung;
(S2) Bestimmen von Quellpunkten und Zielpunkten der Personen im räumlichen Gebiet durch eine mit der Erfassungseinrichtung datenmäßig verbundenen Auswerteeinrichtung; und
(S3) Berechnung der Personenbewegungen in dem räumlichen Gebiet von den Quellpunkten zu den Zielpunkten der Personen durch eine Simulation auf einer Rechnereinrichtung, wobei die Quellpunkte und Zielpunkte der Personen Inputparameter für die Simulation sind, wobei bei der Simulation berücksichtigt wird, dass sich die Personen von den Quellpunkten zu den Zielpunkten über Wartezonen bewegen, wobei die Personen sich in der Wartezone nach Einnahme eines Warteplatzes solange stationär verhalten bis ein Ereignis eintritt, und wobei nach Eintritt des Ereignisses die Personen sich zum Ziel bewegen. Das kann auf einem geeigneten Computersystem (z.B. Laptop, PC) mit Hilfe eines geeigneten Simulationsprogramms ausgeführt werden.

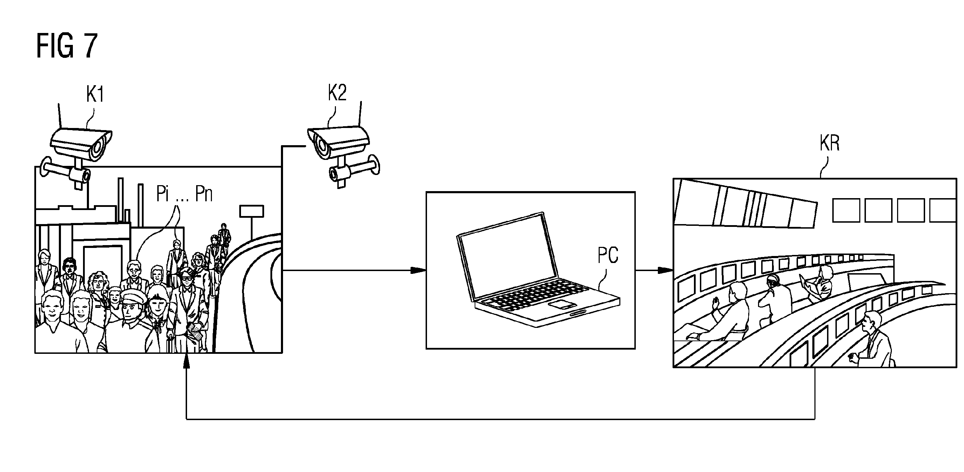

Figur 7 zeigt eine beispielhafte Anwendung für das erfindungsgemäße System bzw. Verfahren. Personen P1 - Pn, die sich in einem räumlichen Gebiet (z.B. Bahnhof) aufhalten, werden durch eine Erfassungseinrichtung (z.B. Kameras K1, K2) erfasst und beobachtet. In einer Rechnereinrichtung PC erfolgt eine Analyse und Vorausberechnung der Personenbewegungen in dem räumlichen Gebiet basierend auf den von der Erfassungseinrichtung gelieferten Daten (Anzahl, Bewegungsrichtungen der Personen Pi - Pn) durch eine Personenstromsimulation. In einer Leitzentrale (z.B. Kontrollraum KR) werden Befehle zur Ansteuerung von Leitelementen (z.B. Hinweisschilder, Lautsprecher, Tore) zur Steuerung der Personenbewegungen erzeugt. Die Befehle zur Ansteuerung der Leitelemente können automatisch basierend auf den Simulationsergebnissen generiert werden. Die Erfassung der Personen Pi - Pn kann auch auf einer anderen Technologie (z.B. RFID, GPS) basieren. Die Analyse und Vorausberechnung der Personenbewegungen in der Rechnereinrichtung PC erfolgt z.B. durch mathematische Modellierung, Szenariotechniken und/oder Simulationen etc. Eine Vorausberechnung der Personenbewegungen kann auch auf der Auswertung von Altdaten erfolgen, die der Rechnereinrichtung PC durch eine Datenbank zur Verfügung gestellt werden können.

System und Verfahren zur Vorhersage von Bewegungen von Personen in einem räumlichen Gebiet mit Wartezonen, basierend auf einer Personenstromsimulation mit zellulären Automaten, das System bzw. das Verfahren aufweisend: eine Rechnereinrichtung zur Vorausberechnung der Personenbewegungen in dem räumlichen Gebiet von Quellen zu Zielen der Personen, wobei die Quellen und Ziele Inputparameter für die Rechnereinrichtung sind, wobei sich die Personen von den Quellen zu den Zielen über Wartezonen als Zwischenziel bewegen, wobei die Personen sich in der Wartezone nach Einnahme eines Warteplatzes solange stationär verhalten bis ein Ereignis eintritt, und wobei nach Eintritt des Ereignisses die Personen sich zum Ziel bewegen. Die Berücksichtigung von Wartezonen in Personensimulationsmodellen ermöglicht eine realistische Prognose des Personenverhaltens insbesondere in Bahnhöfen oder Flughäfen.

### Bezugszeichen

- C1 - C3: Zelle
- RG: Räumliches Gebiet
- WZ1 - WZ8: Wartezone
- WP: Warteplatz
- WP1 - WP3: Warteplatz
- SY: System
- RE, PC: Rechnereinrichtung
- APE: Anpassungseinrichtung
- AE: Auswerteeinrichtung
- DB: Datenbank
- SS: Mensch-Maschine-Schnittstelle
- P, Pi - Pn: Person
- EE: Erfassungseinrichtung
- ZG: Zellgitter
- LZ, KR: Leitzentrale
- LE: Leitelement
- LS: Lautsprecher
- S: Start
- Z, Z1 - Z8: Ziel
- Q: Quelle
- H: Hindernis
- SZ1 - SZ5: Szenario
- S1 - S3: Verfahrensschritt
- K1, K2: Kamera

## Patentansprüche

1. System (SY) zur Vorhersage von Bewegungen von Personen (P, Pi - Pn) in einem räumlichen Gebiet (RG) mit Wartezonen (WZ1 - WZ3), basierend auf einer Personenstromsimulation mit zellulären Automaten, das System (SY) aufweisend:
eine Rechnereinrichtung (RE, PC) zur Vorausberechnung der Personenbewegungen in dem räumlichen Gebiet (RG) von Quellen (Q) zu Zielen (Z, Z1 - Z8) der Personen (P, Pi - Pn), wobei die Quellen und Ziele (Z, Z1 - Z8) Inputparameter für die Rechnereinrichtung (RE, PC) sind,
**dadurch gekennzeichnet, dass**
sich die Personen von den Quellen (Q) zu den Zielen (Z, Z1-Z8) über Wartezonen (WZ1 - WZ3) als Zwischenziel bewegen, wobei die Personen (P, Pi - Pn) sich in der Wartezone (WZ1-WZ3) nach Einnahme eines Warteplatzes (WP) solange stationär verhalten bis ein Ereignis eintritt, und wobei nach Eintritt des Ereignisses die Personen (P, Pi - Pn) sich zum Ziel (Z, Z1 - Z8) bewegen.

2. System (SY) nach Anspruch 1, wobei die Wartezonen (wo1 - WZ3) als polygonförmige Bereiche modelliert sind.

3. System (SY) nach Anspruch 1 oder 2, wobei ein Warteplatz (WP) für eine Person zufällig gewählt wird und die Navigation innerhalb der Wartezone (WZ1 - WZ3) zu dem Warteplatz (WP) direkt mittels euklidischen Abstand erfolgt.

4. System (SY) nach einem der vorstehenden Ansprüche, wobei nach Eintritt des Ereignisses sich die Personen (P, Pi - Pn) in der Simulation auf das Ziel (Z, Z1 ― Z8), ein Zwischenziel oder in eine weitere Wartezone (WZ1 - WZ3) bewegen.

5. System (SY) nach einem der vorstehenden Ansprüche, wobei nach Eintritt des Ereignisses die Personen (P, Pi - Pn) sich in der Simulation gemäß einer vorgegebenen Personenrate auf das Ziel (Z, Z1 ― Z8) in Bewegung setzen.

6. System (SY) nach einem der vorstehenden Ansprüche, wobei das System eine Erfassungseinrichtung umfasst, zur Erfassung der Personenbewegungen in dem räumlichen Gebiet (RG), wobei Quellen (Q) und/oder Ziele (Z, Z1 ― Z8) der Personen (P, Pi - Pn) im räumlichen Gebiet (RG) bestimmbar sind.

7. System (SY) nach einem der vorstehenden Ansprüche, wobei Quellen und Ziele (Z, Z1 - Z8) der Personen im räumlichen Gebiet (RG) durch die Auswertung von Altdaten und/oder Schätzungen bestimmt sind.

8. System (SY) nach einem der vorstehenden Ansprüche, wobei das System (SY) eine Leitstelle (LZ, KR) zur Ansteuerung von Leitelementen (LE, LS) zur Steuerung der Personenbewegungen umfasst.

9. Assistenzsystem zur Steuerung von Bewegungen von Personen (P, Pi - Pn) basierend auf einer Personenstromsimulation, das Assistenzsystem aufweisend:
eine Erfassungseinrichtung (EE) zur Online-Erfassung von aktuellen Personenbewegungen in einem räumlichen Gebiet (RG);
eine Einrichtung (DB) zum Bereitstellen von Altdaten und/oder Schätzungen bezüglich von Quellen (Q) und Zielen (Z, Z1 ― Z8) in dem räumlichen Gebiet (RG);
eine Rechnereinrichtung (RE, PC) zur Vorausberechnung der Personenbewegungen in dem räumlichen Gebiet (RG) basierend auf den von den aktuellen Personenbewegungen und den Altdaten und/oder Schätzungen abgeleiteten Quellpunkten (Q) und Zielpunkten (Z, Z1 ― Z8) der Personen (P, Pi - Pn) in dem räumlichen Gebiet (RG);
eine Leitzentrale (LZ, KR) zur Ansteuerung von Leitetementen (LE, LS) zur Steuerung der Personenbewegungen,
wobei sich die Personen (P, Pi - Pn) von den Quellpunkten (Q) zu den Zielpunkten (Z, Z1 ― Z8) über Wartezonen (WZ1 - WZ3) als Zwischenziele bewegen, wobei die Personen sich in einer Wartezone (WZ1 - WZ3) nach Einnahme eines Warteplatzes (WP) solange stationär verhalten bis ein Ereignis eintritt, und wobei nach Eintritt des Ereignisses die Personen (P, Pi - Pn) sich zum jeweiligen Zielpunkt (Z, Z1 ― Z8) bewegen.

10. Assistenzsystem zur Layoutplanung der Infrastruktur eines für Personen (P, Pi - Pn) zugänglichen räumlichen Gebietes (RG) basierend auf einer Personenstromsimulation für das Gebiet (RG), das Assistenzsystem aufweisend:
eine Einrichtung (DB) zum Bereitstellen von Altdaten und/oder Schätzungen bezüglich der Personenbewegungen in dem räumlichen Gebiet (RG);
eine Rechnereinrichtung (RE, PC) zur Simulation von Personenbewegungen in dem räumlichen Gebiet (RG) basierend auf den Altdaten und/oder aus Schätzungen abgeleiteten Quellpunkten (Q) und Zielpunkten der Personen in dem räumlichen Gebiet (RG),
wobei in der Simulation sich die Personen (P, Pi - Pn) von den Quellpunkten (Q) zu den Zielpunkten über Wartezonen (WZ1 ― WZ3) als Zwischenziele bewegen, wobei die Personen (P, Pi ― Pn) sich in einer Wartezone (WZ1 ― WZ3) nach Einnahme eines Warteplatzes (WP) solange stationär verhalten bis ein Ereignis eintritt, und wobei nach Eintritt des Ereignisses die Personen (P, Pi - Pn) sich zum jeweiligen Zielpunkt (Z, Z1 ― Z8) bewegen.

11. Verfahren zur Simulation von sich in einem räumlichen Gebiet (RG) bewegenden Personenströmen beruhend auf zellulären Zustandsautomaten, wobei das Gebiet (RG) mit einem Zellgitter überzogen wird und jede Zelle verschiedene Zustände einnehmen kann, das Verfahren umfassend die folgenden Schritte:
Erfassung der Personenbewegungen in dem räumlichen Gebiet (RG) durch eine Erfassungseinrichtung (EE, K1, K2);
Bestimmen von Quellpunkten (Q) und Zielpunkten (Z, Z1 ― Z8) der Personen (P, Pi - Pn) im räumlichen Gebiet durch eine mit der Erfassungseinrichtung datenmäßig verbundenen Auswerteeinrichtung;
Berechnung der Personenbewegungen in dem räumlichen Gebiet (RG) von den Quellpunkten (Q) zu den Zielpunkten (Z, Z1 - Z8) der Personen (P, Pi - Pn) durch eine Simulation auf einer Rechnereinrichtung (RE, PC), wobei die Quellpunkte (Q) und Zielpunkte (Z, Z1 ― Z8) der Personen (P, Pi - Pn) Inputparameter für die Simulation sind, wobei bei der Simulation berücksichtigt wird, dass sich die Personen P, Pi - Pn) von den Quellpunkten (Q) zu den Zielpunkten (Z, Z1 ― Z8) über Wartezonen (WZ1 - WZ3) bewegen, wobei die Personen (P, Pi - Pn) sich in der Wartezone (WZ1 - WZ3) nach Einnahme eines Warteplatzes (WP) solange stationär verhalten bis ein Ereignis eintritt, und wobei nach Eintritt des Ereignisses die Personen (P, Pi - Pn) sich zum Ziel (Z, Z1 ― Z8) bewegen.
